# EUROPEAN PATENT SPECIFICATION

(11) **EP 3 290 197 B1**
(45) Date of publication and mention of the grant of the patent: **24.04.2019**
(21) Application number: 16786194.7
(22) Date of filing: 01.03.2016
(51) Int. Cl.: B32B 3/30, B32B 7/12, B32B 27/30, B32B 27/32, B32B 27/36, B32B 27/08, B60R 13/02, G02B 3/00, G02B 27/22

(54) **DECORATIVE SHEET**
DEKORFOLIE
FEUILLE DÉCORATIVE

(30) Priority: 30.04.2015 JP 2015092621
(43) Date of publication of application: 07.03.2018
(73) Proprietor: FUJIFILM Corporation, Tokyo 106-8620 (JP)
(72) Inventor: NAKAMURA Samito, Tokyo 107-0052 (JP); TAKENOSHITA Hiromi, Tokyo 107-0052 (JP); ABIRU Daisaku, Tokyo 107-0052 (JP)
(74) Representative: Klunker IP Patentanwälte PartG mbB
(86) International application number: PCT/JP2016/056272
(87) International publication number: WO 2016/174917

(56) References cited:
- WO-A1-2009/087810
- GB-A- 2 511 905
- JP-A- H11 212 024
- JP-A- 2005 074 719
- JP-A- 2005 074 719
- JP-A- 2012 066 482

## Description

### BACKGROUND OF THE INVENTION

### 1. Field of the Invention

The present invention relates to a decorative sheet that is bonded to an interior part or an exterior part of an automobile or the like.

### 2. Description of the Related Art

A technique of bonding a carbon fiber sheet to an interior part or an exterior part of an automobile or the like for decoration is disclosed (for example, refer to JP3847406B). However, a carbon fiber sheet is obtained by weaving carbon fibers by twill weaving in a sheet shape, and is extremely expensive. Therefore, a carbon texture sheet has been widely used instead of a carbon fiber sheet. This carbon texture sheet is obtained by printing a design similar to a carbon fiber pattern on one surface of a transparent resin sheet (for example, refer to JP2001-246664A).

On the other hand, as a sheet in which an image forming layer is provided on one surface of a transparent resin sheet, a lenticular lens sheet in which a plurality of cylindrical lenses are disposed in parallel is known. For example, in a sheet described in JP1999-212024A (H11-212024A), an image forming layer is formed by disposing a plurality of belt-shaped sub-divided regions in a unit region corresponding to each cylindrical lens. As a result, in a case where the user observes the image forming layer through the cylindrical lenses, images to be observed can switch between each other by changing an observation angle. Further, GB 2511905 A refers to a tubular body comprising a decorative layer in the outer circumferential surface thereof. The decorative layer has a colored layer wherein a plurality of colorants are overlaid in dots to form a hue.

### SUMMARY OF THE INVENTION

A carbon fiber sheet is obtained by weaving carbon fibers and has a fine three-dimensional structure. Therefore, the brightness of patterns changes by changing an observation direction, and thus a stereoscopic effect is produced. On the other hand, a carbon texture sheet is obtained by printing a design on a transparent resin sheet. Therefore, the brightness of patterns does not change even after changing an observation direction, and thus a stereoscopic effect is not produced. Therefore, in a carbon texture sheet, the quality of texture of carbon fibers cannot be obtained, and the decorativeness is poor. Thus, a carbon texture sheet is considered as a lower-cost alternative to a carbon fiber sheet.

Therefore, it is desired that a decorative sheet capable of obtaining a quality of texture equivalent to or higher than that of a carbon fiber sheet is prepared using a lenticular lens sheet.

An object of the present invention is to provide a decorative sheet capable of obtaining quality of a texture equivalent to or higher than that of a real carbon fiber sheet.

A decorative sheet according to the present invention includes a lenticular lens sheet and an image forming layer. In the lenticular lens sheet, a plurality of cylindrical lenses having a convex portion are disposed and a flat surface is provided on a side opposite to the convex portion, wherein a curvature of the convex portion of the cylindrical lenses is set such that a focal point thereof is positioned in an image forming layer. The image forming layer is provided on the flat surface and includes a first design and a second design having mutually inverted densities, in which the first design and the second design switch between each other by changing an observation direction in which the image forming layer is observed through the lenticular lens sheet. The image forming layer includes a first sub-divided region having the first design sub-divided in a belt shape, a second sub-divided region having the second design sub-divided in a belt shape, and a belt-shaped intermediate region being formed between the first sub-divided region and the second sub-divided region, in a unit region corresponding to each of the cylindrical lenses.

It is preferable that the image forming layer includes a gradation design that is formed in the intermediate region and in which a density changes in a direction in which the cylindrical lenses are disposed.

It is preferable that the first design, the second design, and the gradation design are formed of patterns obtained by combining a plurality of shapes. In addition, it is preferable that the shapes are quadrangles. It is preferable that the patterns are twill weaving patterns.

It is preferable that, in the direction in which the cylindrical lenses are disposed, a length of the intermediate region is shorter than a length of the first sub-divided region and a length of the second sub-divided region.

It is preferable that the lenticular lens sheet and the image forming layer are integrally bendable. It is preferable that the decorative sheet is bonded to an interior part of an automobile.

According to the present invention, the image to be observed switches between the first design and the second design by changing the observation direction in which the image forming layer is observed through the lenticular lens sheet. In addition, in the decorative sheet according to the present invention, the image forming layer includes a first sub-divided region having the first design sub-divided in a belt shape, a second sub-divided region having the second design sub-divided in a belt shape, and a belt-shaped intermediate region being formed between the first sub-divided region and the second sub-divided region, in a unit region corresponding to each of the cylindrical lenses. Therefore, quality of a texture equivalent to or higher than that of a real carbon fiber sheet can be obtained.

### BRIEF DESCRIPTION OF THE DRAWINGS

Fig. 1 is a perspective view showing a configuration of a decorative sheet according to the present invention.
Fig. 2 is a cross-sectional view showing major parts of the decorative sheet taken along a direction in which cylindrical lenses are disposed.
Figs. 3A to 3C are diagrams showing images which are observed in a case where the decorative sheet is observed through the cylindrical lenses.
Fig. 4 is a plan view showing an image formed on an image forming layer.
Fig. 5 is an enlarged plan view showing a V-V range of Fig. 4.
Fig. 6 is a graph showing gradations of unit regions U1 to U5 shown in Fig. 5.
Figs. 7A to 7C are diagrams showing images which are observed in a case where the decorative sheet to which plain weaving patterns are applied is observed through the cylindrical lenses.
Fig. 8 is a perspective view showing an example in which the decorative sheet is bonded to an interior part of an automobile.
Fig. 9 is a cross-sectional view showing a state where the decorative sheet is bent.
Fig. 10 is a perspective view showing an example in which the decorative sheet is applied to a lighting device.

### DESCRIPTION OF THE PREFERRED EMBODIMENTS

### [First Embodiment]

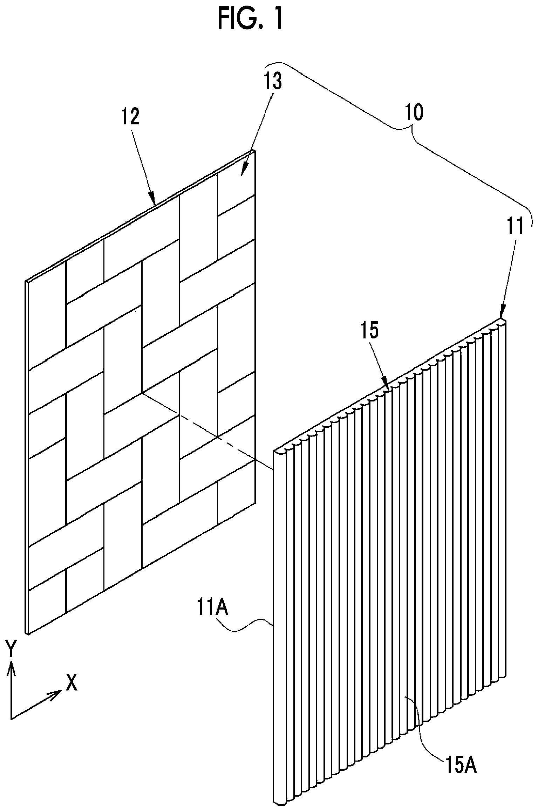

As shown in Fig. 1, a decorative sheet 10 includes: a lenticular lens sheet 11; and an image forming medium 12 in which an image forming layer 13 is formed. The image forming medium 12 is a transparent resin sheet.

The lenticular lens sheet 11 includes a plurality of cylindrical lenses 15. Each of the cylindrical lenses 15 includes a convex portion 15A having a partially cylindrical shape, and a surface of the cylindrical lens 15 opposite to the convex portion 15A is flat. Each of the cylindrical lenses 15 extends in a Y direction and is disposed parallel to an adjacent cylindrical lens 15. That is, the cylindrical lenses 15 are disposed at a regular pitch in an X direction perpendicular to the Y direction. The lenticular lens sheet 11 includes a flat surface 11A opposite to the convex portion 15A.

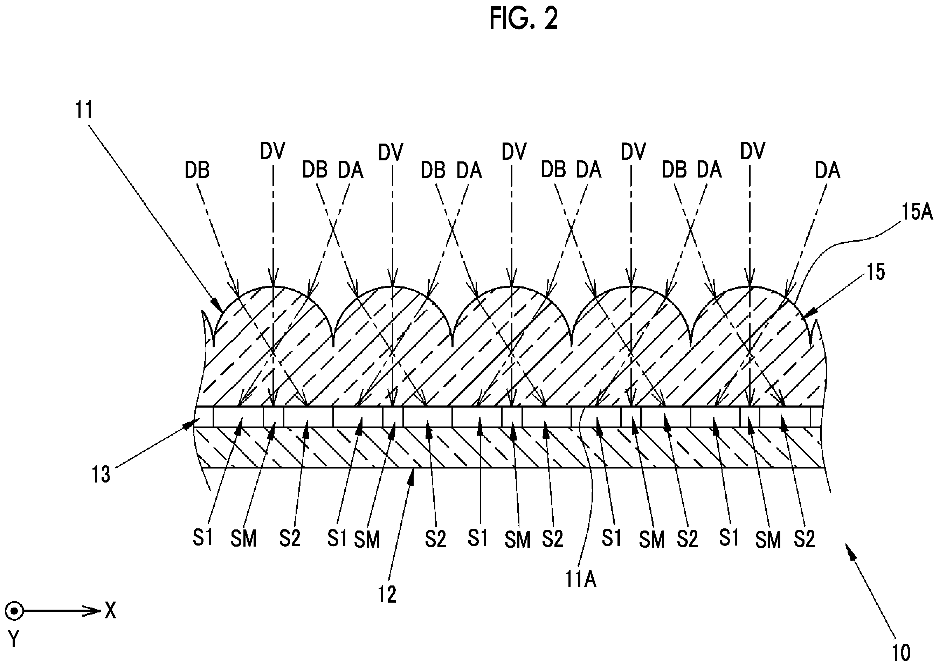

As shown in Fig. 2, in the decorative sheet 10, the image forming layer 13 is observed from the side including the convex portion 15A of the lenticular lens sheet 11. A curvature of the convex portion 15A of the cylindrical lens 15 is set such that a focal point thereof is positioned in the image forming layer 13.

As a material of the lenticular lens sheet 11, for example, a transparent resin material such as polyethylene terephthalate (PET), polypropylene (PP), glycol-modified polyethylene terephthalate (PETG), polycarbonate, acryl, or an acrylate resin is used.

The image forming layer 13 is provided on the flat surface 11A side of the lenticular lens sheet 11. The image forming layer 13 is formed by printing or transferring an image on the image forming medium 12 as the transparent resin sheet. A material of the image forming layer 13 is not particularly limited as long as it is a material that can be closely attached to the image forming medium 12. For example, a well-known paint or the like is capable of being used.

In addition, the lenticular lens sheet 11 and the image forming medium 12 are joined to each other using a method such as adhesion or pressure sensitive adhesion. As a joining agent (adhesive or pressure sensitive adhesive) for joining the lenticular lens sheet 11 and the image forming medium 12, a transparent material that is capable of allowing the image forming layer 13 to be observed through the lenticular lens sheet 11 is used. In addition, it is preferable that the decorative sheet in which the lenticular lens sheet 11 and the image forming medium 12 are integrated is flexible.

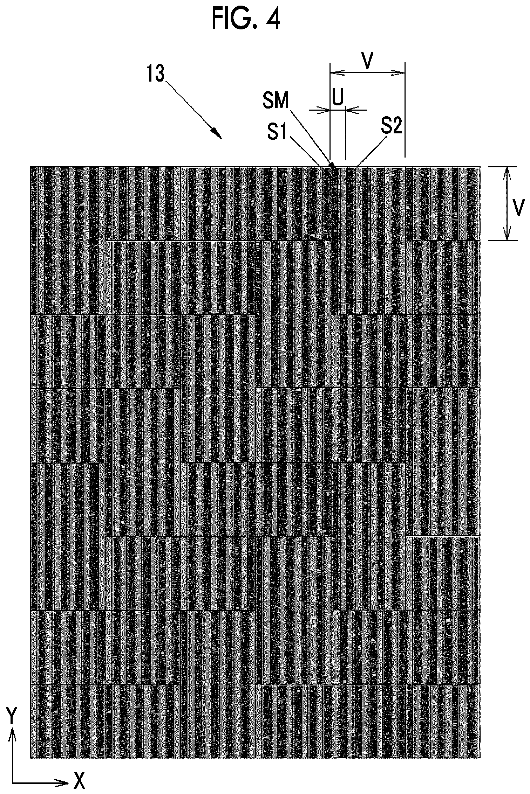

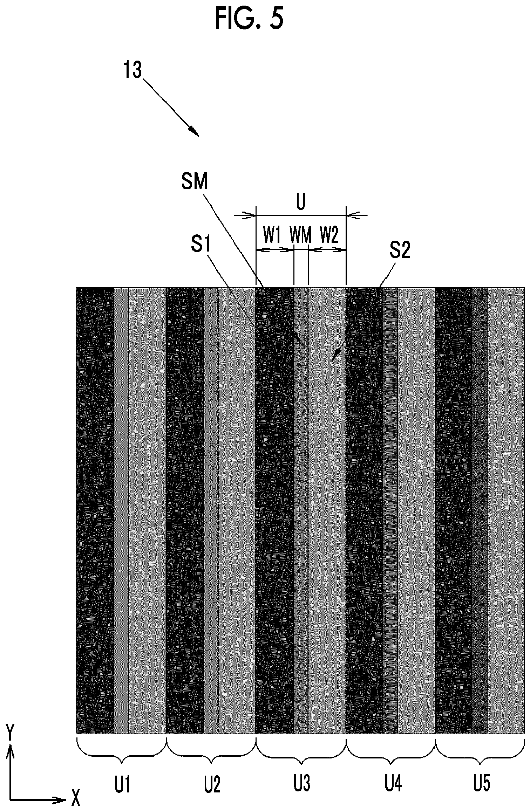

The image forming layer 13 includes a first sub-divided region S1, a second sub-divided region S2, and an intermediate region SM. One set of the first sub-divided region S1, the second sub-divided region S2, and the intermediate region SM are provided in a unit region U (Figs. 4 and 5) corresponding to each of the cylindrical lenses 15, and extend in the Y direction. The first sub-divided region S1 is disposed on a side region (for example, a left-side region) in the unit region U. The second sub-divided region S2 is disposed on the other side region (for example, a right-side region) in the unit region U. The intermediate region SM is disposed in the center region between the first sub-divided region S1 and the second sub-divided region S2. The first sub-divided region S1 and the second sub-divided region S2 are formed at positions that are symmetrical to each other with respect to an optical axis of the cylindrical lens 15.

In the decorative sheet 10, in a case where the image forming layer 13 is observed in a right-side inclined direction (DA in Fig. 2), only the first sub-divided region S1 is observed, where the right-side inclined direction is inclined to the right side from a vertical direction (DV in Fig. 2) perpendicular to the image forming layer 13. In addition, in the decorative sheet 10, in a case where the image forming layer 13 is observed from a left-side inclined direction (DB in Fig. 2), only the second sub-divided region S2 is observed, where the left-side inclined direction is inclined to the left side from the vertical direction DV. In the decorative sheet 10, in a case where the image forming layer 13 is observed from the vertical direction DV, only the intermediate region SM is observed.

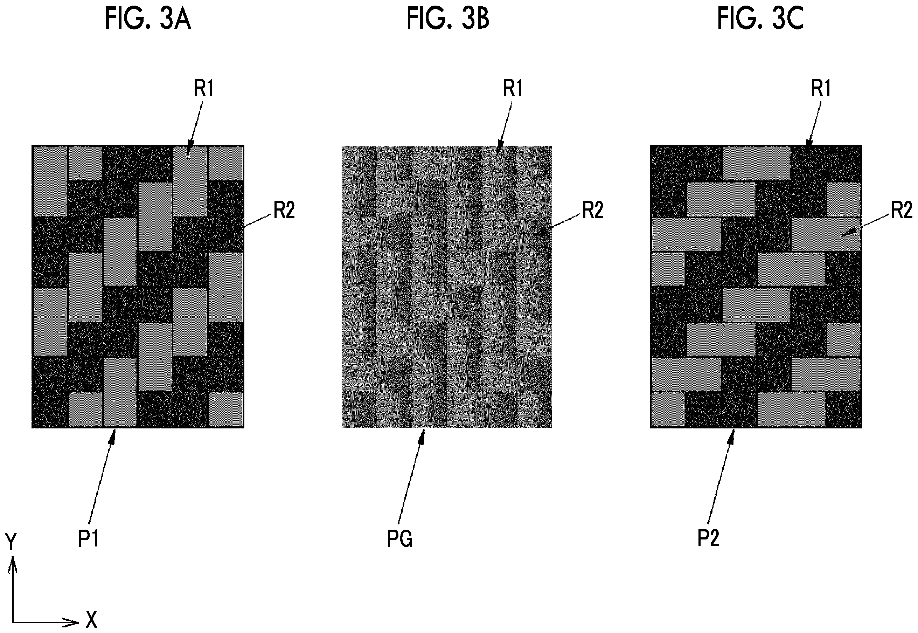

In the first sub-divided region S1, a first design P1 shown in Fig. 3A is sub-divided in a belt shape to form an image. In the second sub-divided region S2, a second design P2 shown in Fig. 3C is sub-divided in a belt shape to form an image. In the intermediate region SM, a gradation design PG shown in Fig. 3B is sub-divided in a belt shape to form an image. Specifically, as shown in Fig. 4, the images of the first design P1, the second design P2, and the gradation design PG are formed in the first sub-divided region S1, the second sub-divided region S2, and the intermediate region SM, respectively, in a state where they are sub-divided in a belt shape.

Accordingly, in the decorative sheet 10, the first design P1, the gradation design PG, and the second design P2 are sequentially observed by sequentially changing an observation direction, in which the image forming layer is observed through the lenticular lens sheet 11, from the right-side inclined direction DA, the vertical direction DV, to the left-side inclined direction DB in the X direction.

The first design P1 and the second design P2 are formed of patterns obtained by combining a plurality of different shapes. Here, shapes that match each other look different by rotating the direction.

In the embodiment, the first design P1 and the second design P2 are similar to twill weaving patterns formed in a case where carbon fibers are twill-woven. Twill weaving is a weaving method in which rows in a vertical direction of carbon fibers and rows in a horizontal direction of the carbon fibers cross each other in alternating rows of two. In the twill weaving pattern, as shown in Figs. 3A to 3C, a first pattern and a second pattern are alternately repeated, in which the first pattern has a structure in which first rectangles R1 having a long length in the vertical direction (having a long length of a side in the Y direction) are disposed obliquely at an angle of 45° with respect to the X direction or the Y direction, and the second pattern has a structure in which second rectangles R2 having a long length in the horizontal direction (having a long length of a side in the X direction) are disposed obliquely at an angle of 45° with respect to the X direction or the Y direction. That is, the first design P1 and the second design P2 are formed of a combination of the first pattern and the second pattern including the first rectangles R1 and the second rectangles R2, respectively.

In the gradation design PG, likewise, the first pattern and the second pattern are alternately repeated, in which the first pattern has a structure in which the first rectangles R1 are disposed obliquely at an angle of 45°, and the second pattern has a structure in which the second rectangles R2 are disposed obliquely at an angle of 45°.

On the image forming layer 13, an image is formed at a density (also referred to as "gradation value") in a predetermined gradation range. In the embodiment, an image formed on the image forming layer 13 is achromatic and is expressed in so-called gray scale. The first design P1 and the second design P2 are drawn using a minimum gradation value (minimum density) and a maximum gradation value (maximum density). Specifically, in the first design P1, the first rectangles R1 are drawn uniformly at the minimum density, and the second rectangles R2 are drawn uniformly at the maximum density. On the other hand, in the second design P2, the first rectangles R1 are drawn uniformly at the maximum density, and the second rectangles R2 are drawn uniformly at the minimum density.

In each of the first design P1 and the second design P2, the first rectangle R1 and the second rectangle R2 have mutually inverted densities. The reason for this is as follows. In a twill weaving pattern of real carbon fibers, light reflection components vary between carbon fibers (corresponding to the first rectangles R1) in the vertical direction (Y direction) and carbon fibers (corresponding to the second rectangles R2) in the horizontal direction (X direction), and the densities also vary therebetween when the twill weaving pattern is observed. The configuration of the first design P1 and the second design P2 is set to be similar to that of the twill weaving pattern of real carbon fibers.

In addition, the first design P1 and the second design P2 have mutually inverted densities. Specifically, the first rectangle R1 having the minimum density in the first design P1 has the maximum density in the second design P2, and the second rectangle R2 having the maximum density in the first design P1 has the minimum density in the second design P2. The reason for this is as follows. In a twill weaving pattern of real carbon fibers, the densities vary depending on an observation direction, and different designs are observed. The configuration of the first design P1 and the second design P2 is set to be similar to that of the twill weaving pattern of real carbon fibers.

In addition, the gradation design PG is drawn at a gradation value (intermediate density) between the minimum gradation value and the maximum gradation value. Specifically, in the gradation design PG, the density in each of the first rectangle R1 and the second rectangle R2 gradually changes in the X direction. In a case where the first rectangles R1 and the second rectangles R2 are drawn at one density, the density is uniform in the entire area, and thus a twill weaving pattern does not appear. By gradually changing the density in each of the first rectangle R1 and the second rectangle R2 in the X direction, the gradation design PG has the intermediate density between the minimum density and the maximum density, and thus the twill weaving pattern can be drawn.

Fig. 5 shows a partial region of the first rectangle R1 of the image forming layer 13. As in the relationship between the first design P1 and the second design P2, the first sub-divided region S1 and the second sub-divided region S2 have mutually inverted densities. Symbols U1 to U5 represent five unit regions U disposed in the X direction.

The length of the first sub-divided region, the intermediate region, and the second sub-divided region, and relationships therebetween are not particularly limited. In the embodiment, in a case where the length of the first sub-divided region S1, the length of the intermediate region SM, and the length of the second sub-divided region S2 in the X direction are represented by W1, WM, and W2, respectively, relationships of WM<W1, WM<W2, and W1=W2 are satisfied. Specifically, in the embodiment, a relationship of "W1:WM:W2=5:2:5" is satisfied.

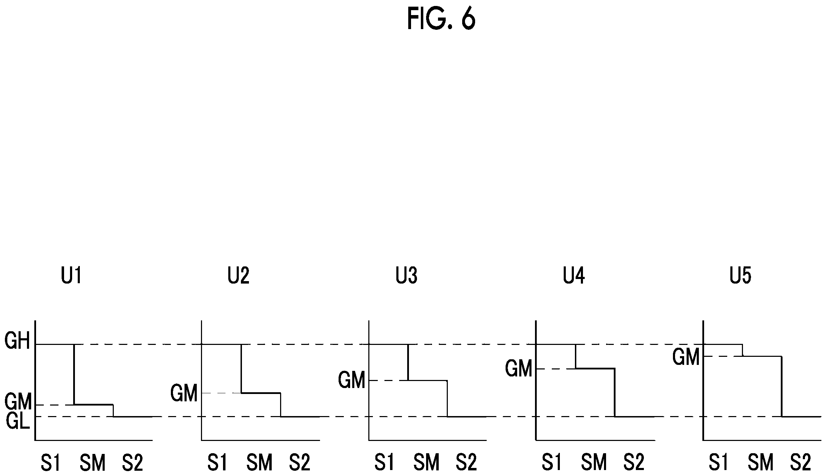

Fig. 6 is a graph showing gradation values (densities) of the unit regions U1 to U5. In the same drawing, the maximum gradation value (maximum density) is represented by GH, and the minimum gradation value (minimum density) is represented by GL. A density GM of the intermediate region SM ranges between the maximum density GH and the minimum density GL, and gradually changes in the direction (X direction) in which the cylindrical lenses 15 are disposed.

With the above-described configuration, in a case where the direction in which the decorative sheet 10 is observed changes to the X direction, when the image to be observed switches from the first design P1 to the second design P2 or switches from the second design P2 to the first design P1, the gradation design PG, in which the twill weaving pattern is drawn at the intermediate density between the density of the first design P1 and the density of the second design P2, is observed.

As described above, in the decorative sheet 10 according to the present invention, in a case where the observation direction changes, the image to be observed switches between the first design P1 and the second design P2 having mutually inverted densities, and the brightness of the patterns appears to be changing. Therefore, a stereoscopic effect is produced. As a result, with the decorative sheet 10, quality of a texture equivalent to or higher than that of a real carbon fiber sheet is capable of being obtained.

In particular, in a real carbon fiber sheet, in a case where the observation direction changes, light reflection components reflected by carbon fibers change, and thus the brightness of patterns changes. Therefore, in an environment where the light amount is small, the brightness is not likely to change. However, in the decorative sheet 10 according to the present invention, even in a case where the light amount is small, the first design P1 and the second design P2 switch between each other due to the function of the lenticular lens sheet 11, and a change in brightness clearly appears.

In addition, in the decorative sheet 10 according to the present invention, by adjusting the length WM of the intermediate region SM, even a small amount of gaze movement, (change in the observation direction) which is half or less than that in a real carbon fiber sheet, is capable of allowing the first design P1 and the second design P2 to switch between each other.

In addition, in the decorative sheet 10, the intermediate region SM is formed between the first sub-divided region S1 and the second sub-divided region S2 corresponding to the first design P1 and the second design P2 that are sub-divided in a belt shape. Therefore, when the observation direction of the observer continuously changes, the first design P1 and the second design P2 can be prevented from being simultaneously observed, and separation between the images can be reliably performed. In a case where the separation between the images is not sufficient, when the images switch between each other, a low-density image may be observed as a ghost. In the decorative sheet 10 according to the present invention, the observation of the ghost is prevented.

In addition, in the decorative sheet 10, the density of the intermediate region SM is set to the intermediate density between the maximum density and the minimum density which are used in the first sub-divided region S1 and the second sub-divided region S2.When the image to be observed switches from the first design P1 to the second design P2, the image having intermediate density is observed, and thus the images switches between each other smoothly. As a result, with the decorative sheet 10, a similar quality of texture to that of a carbon fiber sheet is obtained.

In addition, in each of the first rectangle R1 and the second rectangle R2 of the gradation design PG, the density of the intermediate region SM gradually changes in the X direction. Therefore, the twill weaving pattern is drawn at the intermediate density. As a result, even while the image to be observed switches between the first design P1 and the second design P2, the twill weaving pattern drawn at the intermediate density is observed. Therefore, in the decorative sheet 10, a natural texture which is more similar to that of a carbon fiber sheet can be obtained.

Further, the length WM of the intermediate region SM in the X direction is shorter than the length W1 of the first sub-divided region S1 and the length W2 of the second sub-divided region S2. Therefore, an angle range in which the gradation design PG is observed is only the vicinity of the vertical direction DV. Therefore, when the observation direction of the observer continuously changes, the period of time in which the gradation design PG is observed is short. Therefore, the first design P1 and the second design P2 can switch between each other naturally within a short period of time.

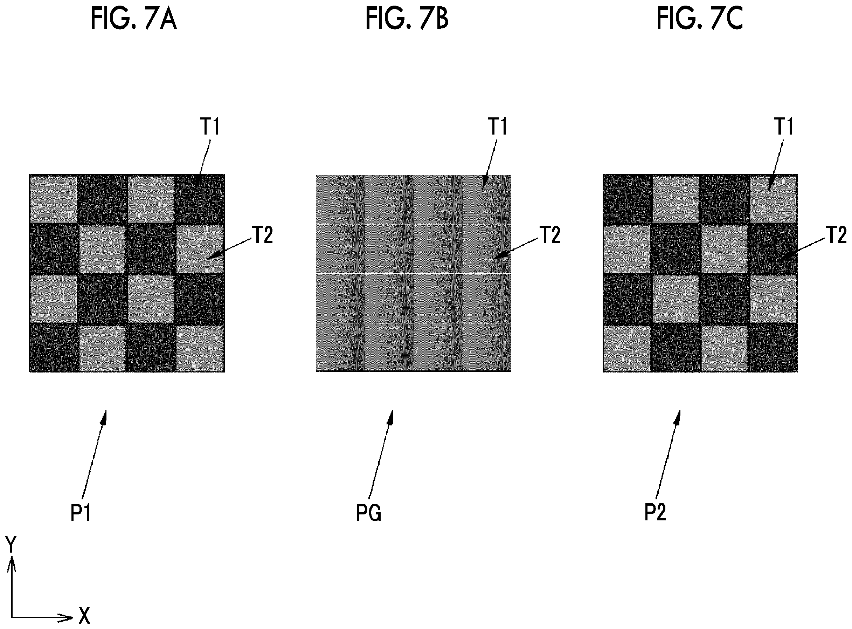

In the first embodiment, the first design P1, the second design P2, and the gradation design PG are twill weaving patterns, but the present invention is not limited thereto. For example, plain weaving patterns may be adopted as shown in a modification example of Figs. 7A to 7C. Plain weaving is a weaving method in which rows in a vertical direction of carbon fibers and rows in a horizontal direction of the carbon fibers alternately cross each other. That is, the plain weaving pattern corresponds to a pattern in which the first rectangles R1 and the second rectangles R2 (Fig. 3) formed in the twill weaving patterns of the first embodiment are substantially squares.

Accordingly, in the first design P1, the second design P2, and the gradation design PG of the modification example shown in Figs. 7A to 7C, first squares T1 and second squares T2 are disposed in a zigzag manner. The densities of the first square T1 and the second square T2 are the same as those of the first rectangle R1 and the second rectangle R2 of the first embodiment, respectively.

The first design P1, the second design P2, and the gradation design PG are not limited to combinations of the first rectangles R1 and the second rectangles R2 in the first embodiment or combinations of the first squares T1 and the second squares T2 in the modification example. The first design P1, the second design P2, and the gradation design PG are not particularly limited as long as they are patterns obtained by combining quadrangles. In addition, in the first embodiment and the modification example, the first design P1, the second design P2, and the gradation design PG are achromatic images but may be chromatic images.

In the first embodiment and the modification example, the image forming medium 12 is bonded to the flat surface 11A of the lenticular lens sheet 11 after forming the image forming layer 13 on the image forming medium 12. However, the image forming layer 13 may be directly formed on the flat surface 11A of the lenticular lens sheet 11 without using the image forming medium 12.

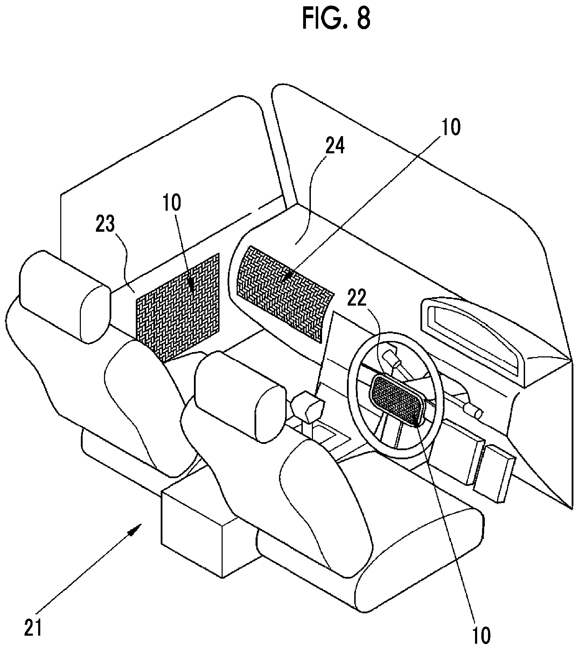

Hereinafter, the form of use of the decorative sheet according to the present invention will be described. Fig. 8 shows an example in which the decorative sheet 10 according to the first embodiment is bonded to an interior part of an automobile 21. The decorative sheet 10 is bonded such that the image forming medium 12 side is in contact with the interior part.

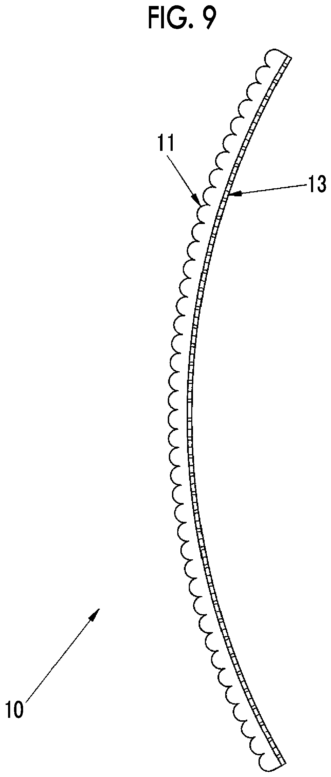

The decorative sheet 10 is bonded to, for example, a steering wheel 22, a door panel 23, or a dashboard 24 of the automobile 21. The decorative sheet 10 is flexible and thus is bonded in a state where it is bent to conform to a curve of a bonding position. For example, in an example shown in Fig. 8, a surface of the dashboard 24 is curved, and the decorative sheet 10 is bent to conform to the curved shape. As shown in Fig. 9, in the decorative sheet 10, the lenticular lens sheet 11 and the image forming layer 13 are integrally bent.

### [Second Embodiment]

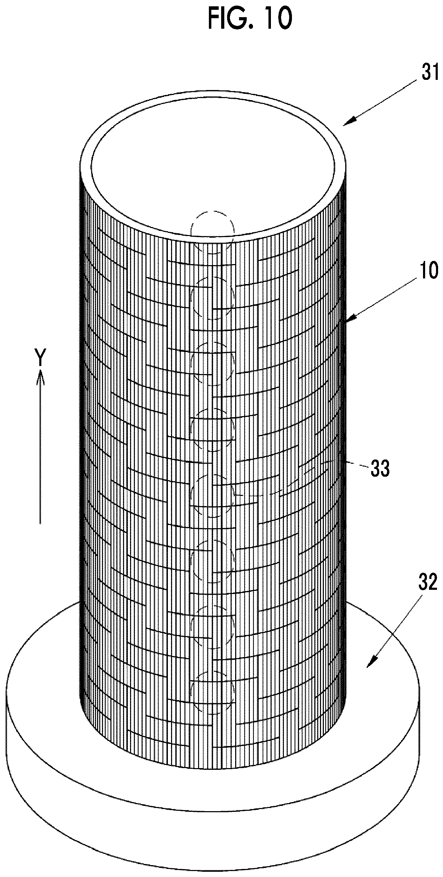

Fig. 10 shows a lighting device 31 in which the decorative sheet 10 according to the first embodiment is used as a lamp shade. The lighting device 31 includes the decorative sheet 10, a stand 32, a plurality of light sources 33, and a light emitting controller (not shown) that controls light emission of each of the light sources 33.

The decorative sheet 10 is bent in a cylindrical shape such that the convex portions 15A of the cylindrical lenses 15 are positioned on the outer circumferential surface side. A bending direction is a direction perpendicular to a longitudinal direction (Y direction) of the cylindrical lenses 15. The decorative sheet 10 is supported by the stand 32.

Each of the light sources 33 is formed of, for example, a light emitting diode (LED) and is supported by a columnar support (not shown). The light sources 33 are disposed in an inner space of the cylindrical decorative sheet 10 at a predetermined interval parallel to each other in the longitudinal direction of the cylindrical lenses 15.

In addition, in the embodiment, it is preferable that the image forming layer 13 is directly formed on the flat surface 11A of the lenticular lens sheet 11 and a light-transmitting material is used as the material of the image forming layer 13. Alternatively, it is preferable that a transparent resin sheet is used as the image forming medium 12 and the image forming layer 13 is formed on the transparent resin sheet using a light-transmitting material.

As a result, light emitted from each of the light sources 33 is diffused in a ring shape in the direction (the bending direction of the decorative sheet 10), in which the cylindrical lenses 15 are disposed, when passing through the decorative sheet 10. In the lighting device 31, light is emitted in a ring shape from each of the light sources 33 through the decorative sheet 10. Therefore, the decorativeness of illumination light is high.

In each of the embodiments, the example in which the decorative sheet according to the present invention is applied to, for example, an interior part or an exterior part of an automobile, or a lighting device has been described, but the present invention is not limited thereto. The decorative sheet according to the present invention is applicable to electric appliances such as smartphones or tablets or to goods such as furniture.

### Explanation of References

10: decorative sheet
11: lenticular lens sheet
12: image forming medium
13: image forming layer
15: cylindrical lens
15A: convex portion
P1: first design
P2: second design
PG: gradation design
S1: first sub-divided region
S2: second sub-divided region
SM: intermediate region
21: automobile
31: lighting device

## Claims

1. A decorative sheet comprising:
a lenticular lens sheet in which a plurality of cylindrical lenses having a convex portion are disposed and a flat surface is provided on a side opposite to the convex portion, wherein a curvature of the convex portion of the cylindrical lenses is set such that a focal point thereof is positioned in an image forming layer; wherein
the image forming layer is provided on the flat surface and includes a first design and a second design having mutually inverted densities and in which the first design and the second design switch between each other by changing an observation direction in which the image forming layer is observed through the lenticular lens sheet,
wherein the image forming layer includes a first sub-divided region having the first design sub-divided in a belt shape, a second sub-divided region having the second design sub-divided in a belt shape, and a belt-shaped intermediate region being formed between the first sub-divided region and the second sub-divided region, in a unit region corresponding to each of the cylindrical lenses.

2. The decorative sheet according to claim 1,
wherein the image forming layer includes a gradation design that is formed in the intermediate region and in which a density changes in a direction in which the cylindrical lenses are disposed.

3. The decorative sheet according to claim 2,
wherein the first design, the second design, and the gradation design are formed of patterns obtained by combining a plurality of shapes.

4. The decorative sheet according to claim 3,
wherein the shapes are quadrangles.

5. The decorative sheet according to claim 4,
wherein the patterns are twill weaving patterns.

6. The decorative sheet according to any one of claims 1 to 5,
wherein in the direction in which the cylindrical lenses are disposed, a length of the intermediate region is shorter than a length of the first sub-divided region and a length of the second sub-divided region.

7. The decorative sheet according to any one of claims 1 to 6,
wherein the lenticular lens sheet and the image forming layer are integrally bendable.

8. An interior part of an automobile to which the decorative sheet according to any one of claims 1 to 7 is bonded.

## Patentansprüche

1. Dekorblatt umfassend:
ein Lentikularlinsenblatt, in welchem eine Vielzahl von Zylinderlinsen mit einem konvexen Abschnitt angeordnet sind und eine flache Oberfläche auf einer dem konvexen Abschnitt gegenüberliegenden Seite vorgesehen ist, wobei eine Krümmung des konvexen Abschnitts der Zylinderlinsen so eingestellt ist, dass deren Brennpunkt in einer Bildausbildungsschicht positioniert ist, wobei
die Bildausbildungsschicht auf der flachen Oberfläche vorgesehen ist und ein erstes Design und ein zweites Design mit wechselseitig invertierten Dichten umfasst, und in welchem das erste Design und das zweite Design zwischen einander umschalten, indem eine Beobachtungsrichtung, in welcher die Bildausbildungsschicht durch das Lentikularlinsenblatt betrachtet wird, verändert wird,
wobei die Bildausbildungsschicht eine erste unterteilte Region mit dem ersten Design, das in eine Riemenform unterteilt ist, eine zweite unterteilte Region mit dem zweiten Design, das in eine Riemenform unterteilt ist, und eine riemenförmige Zwischenregion umfasst, die zwischen der ersten unterteilten Region und der zweiten unterteilten Region ausgebildet ist in einer Einheitsregion, die jeder der Zylinderlinsen entspricht.

2. Dekorblatt nach Anspruch 1,
wobei die Bildausbildungsschicht ein Gradationsdesign umfasst, das in dem Zwischenbereich ausgebildet ist, und in welcher eine Dichte sich in einer Richtung ändert, in welcher die Zylinderlinsen angeordnet sind.

3. Dekorblatt nach Anspruch 2,
wobei das erste Design, das zweite Design und das Gradationsdesign aus Mustern ausgebildet sind, die durch Kombinieren einer Vielzahl von Formen erhalten wird.

4. Dekorblatt nach Anspruch 2,
wobei die Formen Vierecke sind.

5. Dekorblatt nach Anspruch 4,
wobei die Muster Körperbindung-Muster sind.

6. Dekorblatt nach einem der Ansprüche 1 bis 5,
wobei in der Richtung, in welcher die Zylinderlinsen angeordnet sind, eine Länge der Zwischenregion kürzer ist als eine Länge der ersten unterteilten Region und eine Länge der zweiten unterteilten Region.

7. Dekorblatt nach einem der Ansprüche 1 bis 6,
wobei das Lentikular-Linsenblatt und die Bildausbildungsschicht integral biegsam sind.

8. Innenteil eines Automobils, mit welchem das Dekorblatt gemäß einem der Ansprüche 1 bis 7 verbunden ist.

## Revendications

1. Feuille décorative, comprenant :
une feuille de lentilles lenticulaires, où sont disposés une pluralité de lentilles cylindriques présentant une portion convexe et où une surface plane est prévue sur un côté opposé à la portion convexe, dans laquelle une courbure de la portion convexe des lentilles cylindriques est réglée de telle sorte qu'un foyer de celle-ci est positionné dans une couche de formation d'image ; dans laquelle
la couche de formation d'image est prévue sur la surface plane, et inclut un premier dessin et un deuxième dessin présentant des densités inversées entre elles, et où le premier dessin et le deuxième dessin passent de l'un à l'autre en modifiant une direction d'observation suivant laquelle la couche de formation d'image est observée à travers la feuille de lentilles lenticulaires,
dans laquelle la couche de formation d'image inclut une première région subdivisée présentant le premier dessin subdivisé sous une forme de ruban, une deuxième région subdivisée présentant le deuxième dessin subdivisé sous une forme de ruban, et une région intermédiaire subdivisée sous forme de ruban formée entre la première région subdivisée et la seconde région subdivisée, dans une région unitaire correspondant à chacune des lentilles cylindriques.

2. Feuille décorative selon la revendication 1,
dans laquelle la couche de formation d'image inclut un dessin de gradation, lequel est formé dans la région intermédiaire, et où une densité change dans une direction suivant laquelle les lentilles lenticulaires sont disposées.

3. Feuille décorative selon la revendication 2,
dans laquelle le premier dessin, le deuxième dessin et le dessin de gradation sont formés de motifs obtenus en combinant une pluralité de formes.

4. Feuille décorative selon la revendication 3,
dans laquelle les formes sont des quadrilatères.

5. Feuille décorative selon la revendication 4,
dans laquelle les motifs sont des motifs à tissage croisé.

6. Feuille décorative selon l'une quelconque des revendications 1 à 5,
dans laquelle dans la direction suivant laquelle sont disposées les lentilles lenticulaires, une longueur de la région intermédiaire est plus courte qu'une longueur de la première région subdivisée et qu'une longueur de la deuxième région subdivisée.

7. Feuille décorative selon l'une quelconque des revendications 1 à 6,
dans laquelle la feuille de lentilles lenticulaires et la couche de formation d'image peuvent être intégralement pliées.

8. Partie intérieure d'une automobile sur laquelle est collée la feuille décorative selon l'une quelconque des revendications 1 à 5.
